# EUROPEAN PATENT SPECIFICATION

(11) **EP 0 730 721 B1**
(45) Date of publication and mention of the grant of the patent: **21.01.1998**
(21) Application number: 95900756.8
(22) Date of filing: 17.11.1994
(51) Int. Cl.: F25B 49/02, H02H 7/093

(54) **ELECTRONIC CONTROL ARRANGEMENT FOR MOTOR-DRIVEN REFRIGERATION COMPRESSORS**
ELEKTRONISCHE STEUERVORRICHTUNG FÜR EINEN MOTORANGETRIEBENEN KÄLTEVERDICHTER
DISPOSITIF DE COMMANDE ELECTRONIQUE DES COMPRESSEURS DE REFRIGERATION MUS PAR UN MOTEUR

(30) Priority: 01.12.1993 IT PN930073
(43) Date of publication of application: 11.09.1996
(73) Proprietor: Zanussi Elettromeccanica S.p.A., I-33170 Pordenone (IT)
(72) Inventor: Bellomo, Matteo, I-10024 Moncalieri (IT); Bertotti, Tiziano, I-32100 Belluno (IT)
(74) Representative: Giugni, Valter
(86) International application number: EP9403810
(87) International publication number: WO9515468

(56) References cited:
- EP-A- 0 490 089
- EP-A- 0 528 102
- US-A- 5 023 531
- PATENT ABSTRACTS OF JAPAN vol. 11, no. 327 (M-635) 24 October 1987 & JP,A,62 108 947 (MATSUSHITA) 20 May 1987

## Description

The present invention refers to a refrigerator or freezer apparatus equipped with a reciprocating hermetic compressor provided with an electronic control circuit, as defined in the preamble of claim 1. Such an apparatus is known, for example, from EP-A-0 490 089.

Refrigeration compressors of such a type are currently provided with an electric AC induction motor with an on-off type control arrangement and a RPM characteristics corresponding to the power mains frequency, ie. 50 or 60 cycles per second.

The development trend in the area of refrigeration appliances has brought about a growing diffusion of design typologies that, further to a fresh food storage compartment, are also provided with a freezing and/or frozen food storage compartment, wherein all such compartments are served by a common refrigerating circuit operated by a single compressor. In order to be able to cope with the energy peaks required when a maximum allowable load of food has to be frozen in the freezing compartment, these appliances shall necessarily be equipped with a compressor with a power rating that is higher than actually necessary, but adequate in view of the highest possible refrigeration capacity demand for freezing purposes. As a consequence, when the refrigeration appliance operates regularly to just cool down the fresh-food storage compartment, such a compressor turns out to be oversized and uses a considerable amount of energy due to its frequent cycling on and off.

As everybody is by now well aware of, the reduction in energy usage, as associated to and resulting from an enhancement in the efficiency of home appliances in general, is a primary target of the manufacturers, who, in various countries, have been set exacting requirements that they are supposed to comply with in order to limit the energy consumption records of their appliances.

In this connection, a type of compressor is also known as disclosed for instance in the above-mentioned patent specification. EP-A-0 490 089, filed by the same applicant, which describes a particular improvement in a type of brushless reciprocating compressor and a therewith associated control arrangement adapted to let said compressor operate at a number of different, pre-selectable RPMs. Said patent specification also describes two examples of application of the therein illustrated invention, said examples widely demonstrating the advantage achievable through the implementation of such an invention in terms of reduced energy consumption.

Moreover, document EP-A-0 528 102 discloses a refrigerator provided with a protection arrangement preventing operation of the motor of the compressor below a lowest allowable pre-selectable RPM (which corresponds to the rpm limit for oil pumping within the motor-compressor unit).

The practical use of such a type of compressor, as well as the therewith associated electronic control arrangement, has turned out to be connected with some drawbacks that are shortly described below:
- in order to protect mechanical parts against wear or seizure due to poor or lacking lubrication effect, a correct and adequate circulation of lubricating oil shall necessarily be provided; this again requires that a minimum head of the lubrication pump be in any case ensured so as to enable the lubricating oil to adequately reach all wear-exposed parts and spots under any possible operating condition of the compressor following any variation in the refrigeration load, the outer temperature and the supply voltage.

However, no matter how favourable the operating conditions may also be, the head determined by the pump depends on the operating RPM thereof, so that, when such RPM decreases below a pre-determined value, which corresponds to a determined value of the motor frequency, an operating range is entered which constitutes a risky condition as far as the correct operation of the compressor is concerned. If such a risky occurrence has to be avoided, it would be appropriate for the compressor to be prevented from operating at any lower RPM than the RPM which is set as a safety threshold, while taking all the various variables affecting the circulation of the lubricating oil into due account.

It should on the other hand be duly considered that the operation of the compressor is usually kept within quite wide safety margins, and that particular circumstances may be brought about so that an increased refrigerating capacity is on one side required and, on the other side, the compressor is capable of operating at a higher RPM condition adapted to supply such an addition of refrigerating capacity, while however staying within reasonable safety limits.

For instance, such circumstances may occur when a certain load of fresh food has to be frozen quickly, or when the outer temperature undergoes a sudden rise, or again when the door of the freezer compartment is being opened frequently so that a considerable amount of ambient air at a relatively warm temperature is let into the freezer compartment.

Such an increased demand of refrigerating capacity is usually complied with through an extension of the phase of continuous operation of the compressor which, as everybody already knows, in operated cyclically on and off when working under steady-state or regular conditions. However, such a solution does only partially solve the real problem, in the sense that, in meeting the actual refrigeration demand, it tends to make up for the deficiency in refrigerating capacity by extending the time in which the available refrigerating capacity is supplied in a continuous mode.

As a matter of fact, the selection of the freezing capacity in traditional freezing appliances is the outcome of a compromise between the requirement calling for energy usage to be reduced as much as possible, and the need to assure fully acceptable freezing performance capabilities.

The need therefore arises to provide a refrigeration apparatus equipped with a variable-frequency compressor that is capable of doing away with all of the above cited drawbacks without calling for any major construction and design change.

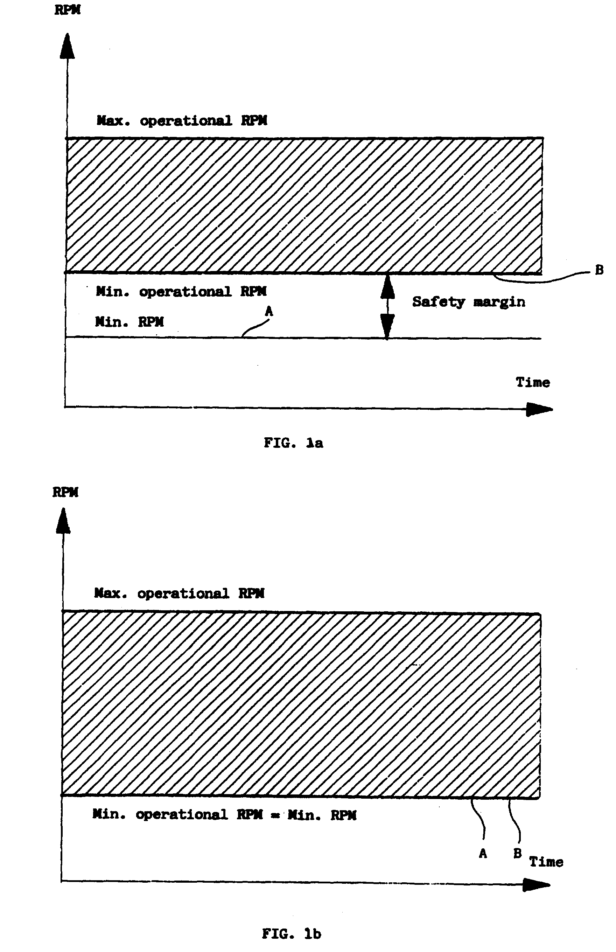

It is a main purpose of the present invention to improve the construction of said refrigeration apparatuses through the features that are essentially described hereinafter by way of non-limiting example with particular reference to the appended claims and the accompanying drawings, in which Figures 1a and 1b comparatively illustrate the operation of a compressor according to a first feature of the invention.

Said first feature of the invention consists in defining a lowest allowable motor RPM Vmin which is such as to take various factors into account, such as the most critical load conditions, the viscosity index or curve of the lubricating oil and all other factors affecting motor RPM, but which is still such as to ensure safe motor operation and, in particular, to enable the lubricating oil to lubricate the compressor and all its associated, wear-prone parts to a fully acceptable extent, wherein said lowest allowable motor RPM level becomes a threshold below which the motor is not allowed to fall, this being reached in the provision of a particular protection circuit arrangement as a part of the control arrangement associated to variable-frequency motor-driven compressor.

If conditions arise so that the motor is caused to fall below such a lowest allowable RPM threshold, said control arrangement is adapted to then separate the motor from its power supply, thereby de-energizing and stopping it immediately.

This may be viewed in the graphs illustrated in the Figures, where Figure la shows the RPM variation range of a variable-frequency compressor not provided with such a protection arrangement. It can be clearly seen that the lowest allowable RPM A, ie. the one representing safety RPM threshold, is quite distinct and appreciably lower than the lowest operating RPM B. The safety margin separating said RPM conditions ensures that, in practice, the compressor motor RPM does not fall to such an extent as to reach said lowest allowable RPM limit, while said lowest operating RPM B constitutes at the same time also the lower limit of the RPM variation range.

Referring now to Figure 1b, it can be seen how the addition of the afore cited protection arrangement allows the lowest operating RPM A to be lowered down to the safety limit , ie. until it coincides with the lowest RPM B. The advantage that is derived from such a fact lies in the fact that the RPM variation range widens correspondingly, as it can be easily inferred when comparing the graphs shown in the two Figures.

Such a protection on the lowest frequency is easily achievable since said control arrangement is already adpated to detect the operating frequency of the motor, so that the way in which such a protection circuit can be actually implemented is quite at the reach of anyone skilled in the art.

An advantageous improvement of the present invention consists in defining and specifying such a protection circuit in such a way as to let it trip and stop the motor only after a lower RPM than said lowest allowable RPM has been detected for a certain pre-defined number of cycles or a certain minimum time. Such a precautionary measure has to be taken in view of the fact that the motor might be temporarily slowed down to a lower RPM than the lowest allowable one Thin owing to the effect of fast voltage transients, improper signals or pulses, etc., and not stable causes that are capable of slowing it down for long periods of time that may prove critical for a correct lubrication.

A further advantageous improvement consists in providing said protection circuit with appropriate means capable of excluding or disenabling it automatically during the starting transient, for resetting or enabling it again after such a transient has taken place.

The re-enablement or resetting of such a protection arrangement may be allowed to take place based on such a lowest allowable RPM, or any other threshold RPM Vs as pre-determined on the basis of the characteristics of the motor and its load, being again exceeded.

As far as the second afore mentioned requirement is concerned, ie. the possibility of letting the compressor operate for limited periods of time at a higher capacity than the rating set at the factory, according to a second feature of the present invention a highest allowable RPM Vmax is defined to be compatible with the operation of the compressor for a definite and limited time, wherein said highest allowable RPM can be controlled by said control arrangement on the basis of an appropriate command sent from the outside.

It is in such a way possible, by setting a higher refrigerating capacity than the steady-state one, to use the additional freezing capacity to either cut the required freezing time for the same amount of fresh food to be frozen or increase the amount of fresh food to be frozen for the same freezing time required.

An advantageous improvement of such a manner of operation consists in sending to said control arrangement a combination of signals that are indicative of the different operating conditions of the refrigeration apparatus, such as for instance the outer temperature, the inner storage temperature, the temperature of the lubricating oil, the temperature that has been possibly set by the user, etc., so that, in the presence of particularly favourable conditions and combinations thereof, said control arrangement is capable of becoming activated to cause the motor to operate at a RPM Vmax' which is higher than the typical steady-state RPM for a pre-determined period of time or until the conditions that have commanded operation at such a RPM prevail.

It will be of course appreciated that such a second RPM Vmax' may or may not coincide with said RPM Vmax, according to which type of function one wishes to comply with or achieve with these two different cases.

Said two RPMs Vmax and Vmax' are of course switched off by the control arrangement as soon as an appropriate reset command is sent from the outside or as soon as the afore cited operation conditions of the refrigeration apparatus cease to exist.

## Claims

1. Refrigerator or freezer apparatus, preferably of the household type, equipped with at least a hermetic reciprocating compressor provided with a brushless-type electric driving motor and electronic frequency control arrangement adapted to operate said motor at a plurality of different pre-selectable RPMs, and provided with a protection arrangement constituted by a lowest allowable pre-selectable RPM (Vmin) of said motor below which said control arrangement is adapted to cut off the operation of said motor, **characterized in that** said protection arrangement is activated only after the frequency control arrangement has detected a pre-defined number of revolutions performed or a pre-defined time span of the motor operating at a RPM lower than said lowest allowable RPM (Vmin).

2. Apparatus according to claim 1, **characterized in that** said control arrangement is adapted to select a motor RPM (Vmax) which is different from any pre-selectable RPM when said control arrangement is supplied with a first external command.

3. Apparatus according to any of the preceding claims, **characterized in that** said control arrangement is adapted to select a motor RPM (Vmax') which is different from any pre-selectable RPM when said control arrangement is supplied with a first combination of signals that are indicative of the way in which and the conditions under which said apparatus is operating.

4. Apparatus according to claim 2 or 3, **characterized in that** said different RPMs (Vmax, Vmax') are higher than any pre-selectable RPM.

5. Apparatus according to claim 4, **characterized in that** said control arrangement is adapted to exclude said different RPMs (Vmax, Vmax') either when said control arrangement is supplied with a second combination of signals that are indicative of the operating conditions of said apparatus, or after a pre-determined time span is elapsed from the beginning of operation of the motor at said RPMs.

6. Apparatus according to claim 2 or 4, **characterized in that** said control arrangement is adapted to exclude said different RPM(s) (Vmax, Vmax') when said control arrangement is supplied with a second external command.

## Patentansprüche

1. Kühl- oder Gefrierapparat, vorzugsweise vom Haushaltstyp, der mit wenigstens einem hermetischen Hubkolbenkompressor ausgestattet ist, der mit einem bürstenlosen elektrischen Antriebsmotor und einer elektronischen Frequenzsteuervorrichtung versehen ist, die eingerichtet ist, den Motor bei einer Mehrzahl verschiedener vorwählbarer Drehzahlen zu betreiben, und versehen mit einer Schutzvorrichtung, die durch eine niedrigste, zulässige vorwählbare Drehzahl (Vmin) gebildet wird, unter der die Steuervorrichtung den Betrieb des Motors unterbricht, dadurch gekennzeichnet, daß die Schutzvorrichtung nur aktiviert wird, nachdem die Frequenzsteuervorrichtung eine vordefinierte Anzahl durchgeführter Umdrehungen oder eine vordefinierte Zeitspanne ermittelt hat, die der Motor bei einer Drehzahl niedriger als die niedrigste zulässige Drehzahl (Vmin) arbeitet.

2. Apparat nach Anspruch 1, dadurch gekennzeichnet, daß die Steuervorrichtung eingerichtet ist, eine Motordrehzahl (Vmax) zu wählen, die sich von jeder vorwählbaren Drehzahl unterscheidet, wenn die Steuervorrichtung mit einem ersten externen Befehl versorgt wird.

3. Apparat nach einem der vorangehenden Ansprüche, dadurch gekennzeichnet, daß die Steuervorrichtung eingerichtet ist, eine Motordrehzahl (Vmax') zu wählen, die sich von jeder vorwählbaren Drehzahl unterscheidet, wenn die Steuervorrichtung mit einer ersten Kombination von Signalen versorgt wird, die die Art und Weise, in der, und die Bedingungen, unter denen der Apparat arbeitet, anzeigen.

4. Apparat nach Anspruch 2 oder 3, dadurch gekennzeichnet, daß die verschiedenen Drehzahlen (Vmax, Vmax') höher als jede vorwählbare Drehzahl sind.

5. Apparat nach Anspruch 4, dadurch gekennzeichnet, daß die Steuervorrichtung eingerichtet ist, die verschiedenen Drehzahlen (Vmax, Vmax') auszuschließen, wenn entweder die Steuervorrichtung mit einer zweiten Kombination von Signalen, die die Betriebsbedingungen des Apparates anzeigen, versorgt wird, oder nachdem eine vorbestimmte Zeitspanne seit dem Beginn des Betriebs des Motors bei diesen Drehzahlen vergangen ist.

6. Apparat nach Anspruch 2 oder 4, dadurch gekennzeichnet, daß die Steuervorrichtung eingerichtet ist, die verschiedenen Drehzahlen (Vmax, Vmax') auszuschließen, wenn die Steuervorrichtung mit einem zweiten externen Befehl versorgt wird.

## Revendications

1. Dispositif de réfrigération ou de congélation, de préférence de type ménager, équipé d'au moins un compresseur hermétique en va-et-vient muni d'un moteur d'entraînement électrique sans balai et d'un système de commande électronique de fréquence adapté pour actionner ledit moteur à une pluralité de vitesses de rotation préréglables différentes RPMs, et muni d'un système de protection constitué d'une vitesse de rotation minimale admissible préréglable (Vmin) dudit moteur, au-dessous de laquelle ledit système de commande est adapté pour couper le fonctionnement dudit moteur, caractérisé en ce que ledit système de protection n'est activé qu'après que le système de commande de fréquence ait détecté un nombre prédéterminé de tours effectués ou une durée prédéterminée pendant laquelle le moteur fonctionne à une vitesse de rotation inférieure à ladite vitesse minimale admissible RPM (Vmin).

2. Dispositif selon la revendication 1, caractérisé en ce que ledit système de commande est adapté pour sélectionner une vitesse de rotation du moteur RPM (Vmax) qui est différente de toute vitesse de rotation préréglable lorsque ledit système de commande reçoit une première commande externe.

3. Dispositif selon l'une quelconque des revendications précédentes, caractérisé en ce que ledit système de commande est adapté pour sélectionner une vitesse de rotation du moteur RPM (Vmax') qui est différente de toute vitesse de rotation préréglable lorsque ledit système de commande reçoit une première combinaison de signaux qui indiquent la manière selon laquelle, et les conditions dans lesquelles, ledit dispositif fonctionne.

4. Dispositif selon la revendication 2 ou 3, caractérisé en ce que lesdites vitesses de rotation différentes RPMs (Vmax, Vmax') sont supérieures à toute vitesse de rotation préréglable RPM.

5. Dispositif selon la revendication 4, caractérisé en ce que ledit système de commande est adapté pour exclure lesdites vitesses de rotation différentes RPMs (Vmax, Vmax') lorsque ledit système de commande reçoit une deuxième combinaison de signaux représentatifs des états de fonctionnement dudit dispositif, ou après un intervalle de temps prédéterminé à partir du début du fonctionnement du moteur auxdites vitesses de rotation RPMs.

6. Dispositif selon la revendication 2 ou 4, caractérisé en ce que ledit système de commande est adapté pour exclure lesdites vitesses de rotation différentes RPM(s) (Vmax, Vmax') lorsque ledit système de commande reçoit une deuxième commande externe.
